# EUROPÄISCHE PATENTSCHRIFT

(11) **EP 2 161 159 B1**
(45) Veröffentlichungstag und Bekanntmachung des Hinweises auf die Patenterteilung: **09.10.2019**
(21) Anmeldenummer: 09168174.2
(22) Anmeldetag: 19.08.2009
(51) Int. Cl.: B60N 2/28

(54) **Sicherheitsvorrichtung für einen Kindersitz in einem Fahrzeug**
Safety device for a child seat in a vehicle
Dispositif de sécurité pour un siège enfant dans un véhicule

(30) Priorität: 08.09.2008 DE 102008046249
(43) Veröffentlichungstag der Anmeldung: 10.03.2010
(73) Patentinhaber: CYBEX GmbH, 95448 Bayreuth (DE)
(72) Erfinder: Pos, Martin, 95445 Bayreuth (DE)
(74) Vertreter: Popp, Eugen

(56) Entgegenhaltungen:
- DE-C1- 19 715 875
- US-A- 4 662 683
- US-A- 4 909 574
- US-A- 5 599 060

## Beschreibung

Die vorliegende Erfindung betrifft eine Sicherheitsvorrichtung für einen Kindersitz in einem Fahrzeug, mit Sitzfläche, Rücken- und ggf. Armlehnen, welche zumindest ein Fangelement umfaßt, das sich etwa quer oberhalb der Oberschenkel eines in dem Kindersitz sitzenden Kindes erstreckend in Richtung etwa parallel zur Sitzfläche verstellbar gelagert ist.

Eine derartige Sicherheitsvorrichtung ist zum Beispiel bekannt aus der DE 103 51 918 A1 oder DE 198 55 032 C1. Bei der Konstruktion gemäß der DE 103 51 918 A1 führt das Fangelement im Fall einer Verzögerung des Fahrzeuges eine auf das Kind gerichtete Bewegung aus. Damit soll das Sicherheitspotential für das Kind im Falle eines Unfalls erhöht werden, indem die Bewegung bzw. die Nickbewegung des Kinderkörpers im Falle einer erheblichen Verzögerung des Fahrzeuges weiter eingeschränkt bzw. vermieden wird.

Bei der Konstruktion gemäß der DE 198 55 032 C1 geht es primär um einen erhöhten Komfort. Das Fangelement weist zwei klappbare Teile auf, die den Ein- und Ausstieg des Kindes erleichtern. Des weiteren ist das Fangelement in Längsrichtung der Armlehnen des Kindersitzes zur Einstellung auf die Größe des Kindes verschiebbar gelagert.

Damit allein läßt sich jedoch eine Einstellung auf die Größe des Kindes nur unzureichend erreichen.

Dementsprechend liegt der vorliegenden Erfindung die Aufgabe zugrunde, eine Sicherheitsvorrichtung für einen Kindersitz in einem Fahrzeug zur Verfügung zu stellen, die neben der geforderten Sicherheit im Falle einer starken Verzögerung des Fahrzeuges bzw. eines Unfalls einen erhöhten Komfort für das Kind bietet.

Diese Aufgabe wird erfindungsgemäß durch die kennzeichnenden Merkmale des Anspruches 1 gelöst, wobei vorteilhafte Details und Weiterentwicklungen in den Unteransprüchen beschrieben sind.

Ein Aspekt der vorliegenden Erfindung liegt also darin, daß die Verstellrichtung des Fangelements sich relativ zur Sitzfläche in einem vorbestimmten von hinten nach vorne ansteigenden Winkel von größer 0, insbesondere von etwa 5° bis 20° erstreckt. Damit läßt sich das Fangelement der Körpergröße des Kindes sowohl in horizontaler als auch in vertikaler Richtung besser anpassen.

Vorzugsweise ist das Fangelement stufenlos, oder alternativ stufenweise verstellbar. Im letztgenannten Fall ist das Fangelement vorzugsweise an jeder Verstellstufe verrastbar. Bezüglich der Ausbildung einer entsprechenden Rasteinrichtung wird auf die Ansprüche 5 bis 7 verwiesen.

Ein besonderes Sicherheitselement stellt der Vorschlag nach Anspruch 8 dar, der in Kombination mit der vorgenannten Erfindung zur Anwendung kommen kann. Dementsprechend soll das Fangelement unter Einwirkung von Aufprallkräften plastisch deformierbare Elemente umfassen, die einen Großteil der Aufprallenergie aufnehmen und vernichten. Diese plastisch deformierbaren Elemente können Teil der Längsführung des Fangelements am Kindersitz sein. Alternativ können derartige plastisch deformierbare Elemente im Bereich der Brustauflage oder im Bereich des Anschlusses des Fangelements am Kindersitz vorgesehen sein.

Ein weiterer Aspekt der vorliegenden Erfindung zeichnet sich dadurch aus, daß das Fangelement zugleich die Aufnahme des dem Kraftfahrzeug zugeordneten Sicherheitsgurtes dient, wodurch der Kindersitz samt Fangelement am Fahrzeugsitz festlegbar ist. Insofern erfüllt das Fangelement eine Doppelfunktion, nämlich
- Aufnahme des dem Kraftfahrzeug zugeordneten Sicherheitsgurtes und dadurch Festlegung des Kindersitzes am Fahrzeugsitz;
- an die Größe des Kindes anpaßbares Halteelement für das Kind im Sitz.

Nachstehend wird eine bevorzugte Ausführungsform einer Sicherheitsvorrichtung gemäß vorliegender Erfindung anhand der beigefügten Zeichnung näher beschrieben, wobei dabei auch weitere Aspekte der vorliegenden Erfindung hervorgehoben sind. Es zeigen:
- Fig. 1: eine perspektivische Ansicht eines Kindersitzes mit Fangvorrichtung;
- Fig. 2: das Sitzteil des Kindersitzes gemäß Fig. 1 ohne gepolsterte Verkleidung und mit erfindungsgemäß ausgebildetem Fangelement in Seitenansicht;
- Fig. 3: die Abbildung entsprechend Fig. 2, wobei das Fangelement etwas nach vorne/oben verstellt ist (mittlere Position);
- Fig. 4: die Abbildung entsprechend Fig. 2, wobei das Fangelement sich in seiner vordersten Lage relativ zum Sitzteil befindet (maximale Tiefe und Höhe des Fangelements relativ zum Sitz);
- Fig. 5: eine Abbildung entsprechend Fig. 2 unter schematischer Darstellung der Relativbewegung des Fangelements zum Sitzteil;
- Fig. 6: das Fangelement in perspektivischer Vorderansicht;
- Fig. 7: das Fangelement in perspektivischer Schnittansicht unter Darstellung eines Rastmechanismus in geöffnetem Zustand; und
- Fig. 8: die Darstellung entsprechend Fig. 7 mit Rastmechanismus in verriegeltem Zustand.

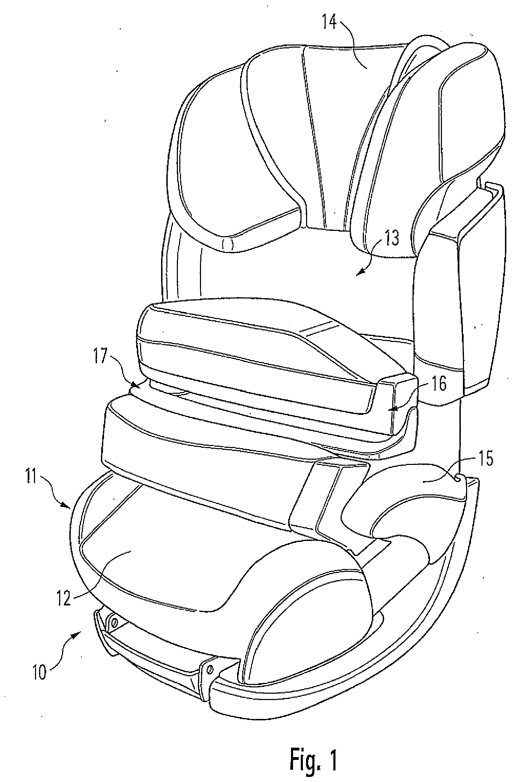

In Fig. 1 ist ein Kindersitz 10 abgebildet, der zur Anbringung auf einem Fahrzeugsitz, beispielsweise auf einer Kraftfahrzeug-Rücksitzbank, bestimmt ist. Dieser Kindersitz umfaßt ein Sitzteil 11 mit Sitzfläche 12, eine Rückenlehne 13 mit Kopfstütze 14 sowie zwei Armlehnen 15, die im vorliegenden Fall integral mit dem Sitzteil 11 verbunden sind. Des weiteren ist dem Kindersitz 10 ein Fangelement 16 zugeordnet, das sich quer oberhalb der Oberschenkel eines in dem Kindersitz sitzenden Kindes erstreckend in Längsrichtung der Armlehnen 15 verstellbar gelagert ist. An der Vorderseite des querbügelartigen Fangelements ist eine schlitzartige Öffnung 17 zur Aufnahme von Abschnitten eines einem Kraftfahrzeug zugeordneten Sicherheitsgurtes, insbesondere Dreipunkt-Sicherheitsgurtes ausgebildet. In diesem Fall erstreckt sich sowohl ein Horizontal- als auch Diagonalabschnitt des Sicherheitsgurtes durch die schlitzartige Öffnung 17 hindurch. Damit wird der Kindersitz 10 am Fahrzeugsitz durch den Sicherheitsgurt gehalten.

Das Fangelement 16 umfaßt vorzugsweise einen Höhl -oder Schaumkörper mit etwa U-förmigem Querschnitt, der in Richtung nach vorne hin offen ist und die erwähnte Gurtaufnahme 17 definiert. An der dem Kind zugewandten Seite, d.h. sowohl der der Rückenlehne 13 als auch der Sitzfläche 12 zugewandten Seite ist das Fangelement 16 gepolstert.

Wie bereits eingangs erwähnt, kann das Fangelement 16 unter Einwirkung von Aufprallkräften plastisch deformierbare Elemente umfassen, insbesondere im Brustauflagebereich oder im Bereich des Anschlusses am Kindersitz, insbesondere an beiden Armlehnen 15 desselben. Der sicherheitstechnische Aspekt dieser Ausbildung ist ebenfalls eingangs erwähnt.

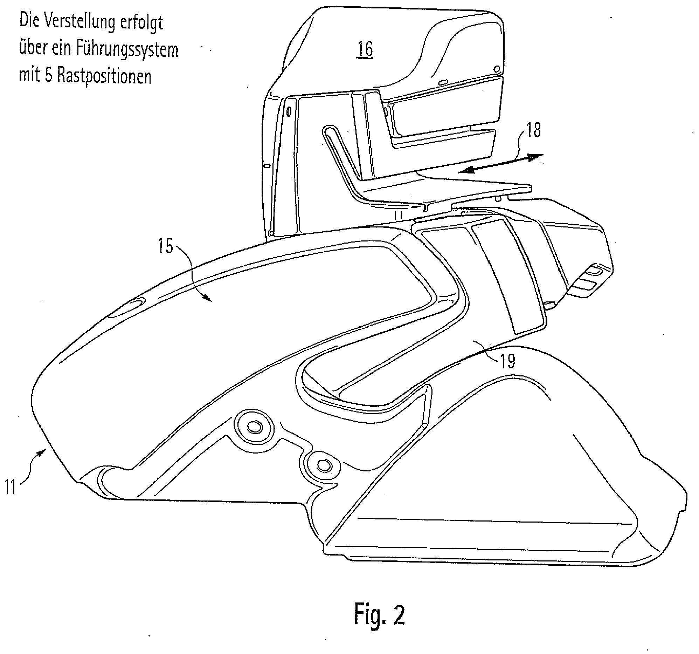

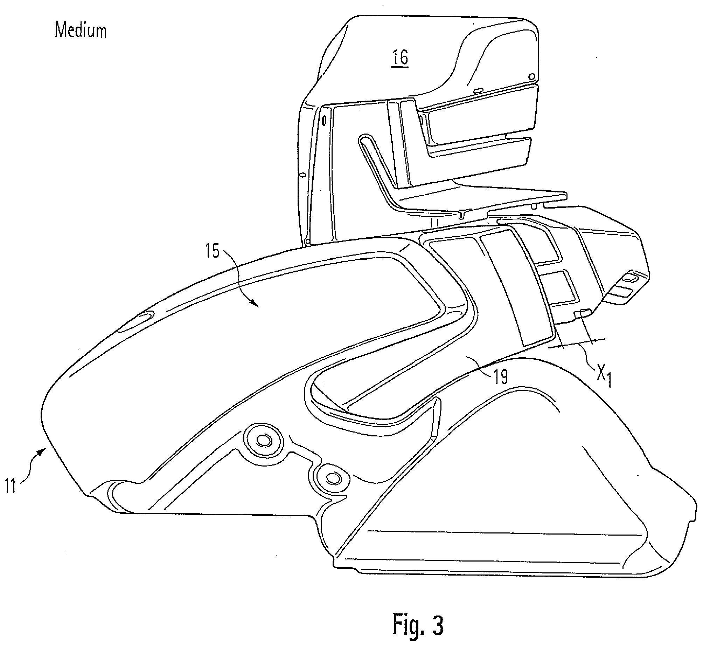

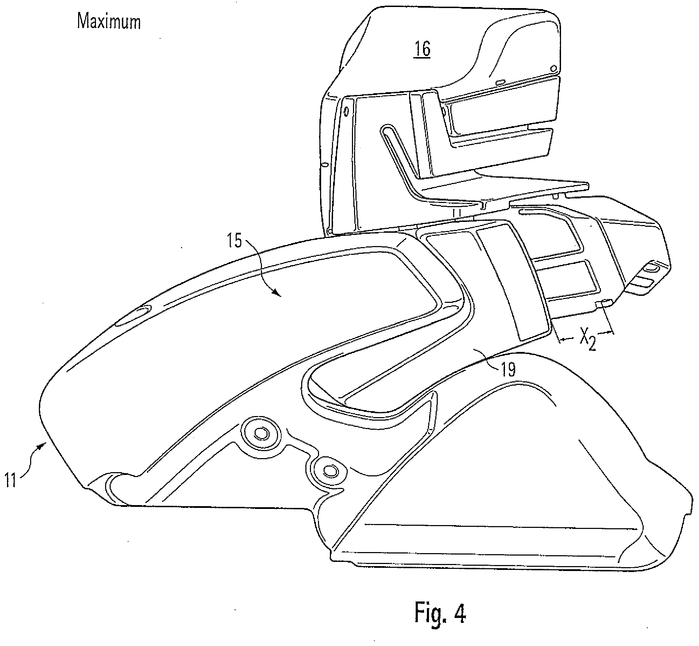

In Fig. 2 ist nur das Sitzteil 11 ohne Polsterung und Überzug dargestellt, und zwar in Seitenansicht. Fig. 2 läßt auch sehr gut erkennen, daß die dem Sitzteil 11 zugeordneten Armlehnen 15 integral mit dem Sitzteil verbunden sind. An diesen Armlehnen 15 ist über ein Anschlußteil 19 das Fangelement 16 befestigt. Die Befestigung des Fangelements 16 am Anschlußteil 19 erfolgt so, daß das Fangelement 16 in Richtung des Doppelpfeiles 18 hin- und herbewegbar ist. Diese Relativbewegung ist durch Vergleich der Figuren 2 mit den Figuren 3 und 4 erkennbar. In Fig. 2 befindet sich das Fangelement 16 in der hintersten Stellung, d.h. in einer Stellung, in der es sowohl der Rückenlehne als auch der Sitzfläche am nächsten liegt. In Fig. 3 ist das Fangelement 16 um eine vorbestimmte Strecke "X₁" nach vorne verschoben und dort verrastet. In Fig. 4 befindet sich das Fangelement 16 in der vordersten Stellung. Die Verschiebestrecke ist mit "X₂" gekennzeichnet.

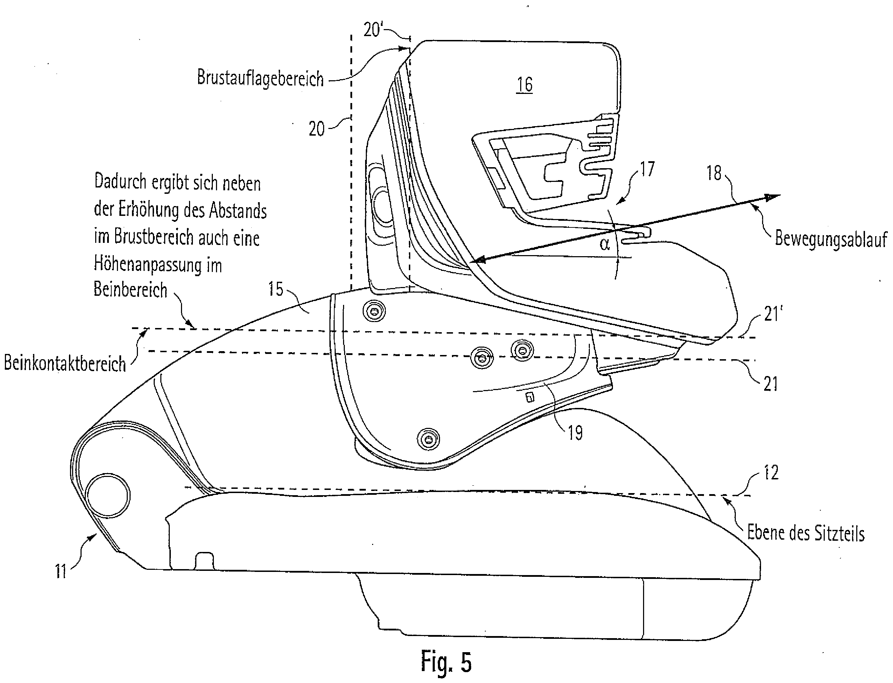

Den Figuren 2 bis 4 kann ebenso wie der Fig. 5 entnommen werden, daß die Verstellrichtung des Fangelements 16 sich relativ zur Sitzfläche 12 (siehe insbesondere Fig. 5) in einem entweder vorbestimmten oder sich frei einstellenden, von hinten nach vorne ansteigenden Winkel α von größer 0, insbesondere von etwa 5° bis 20° erstreckt. Damit läßt sich das Fangelement in optimaler Weise an unterschiedliche Körpergrößen eines im Kindersitz sitzenden Kindes anpassen, und zwar sowohl im Brustbereich als auch im Bereich der Oberschenkel des Kindes. Mit anderen Worten, es läßt sich erfindungsgemäß sowohl die Tiefe als auch die Höhe des Fangelements 16 einstellen, nämlich die Tiefe relativ zur Brust und die Höhe relativ zu den Oberschenkeln eines Kindes. In Fig. 5 sind zwei zugeordnete Brustauflagebereiche einerseits und Beinkontaktbereiche andererseits mit den Bezugsziffern 20, 20' bzw. 21, 21' gekennzeichnet.

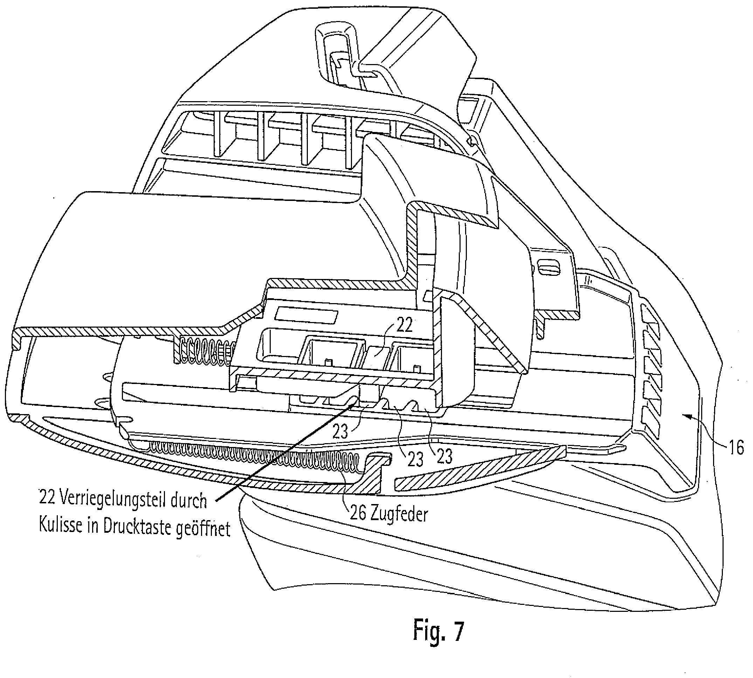

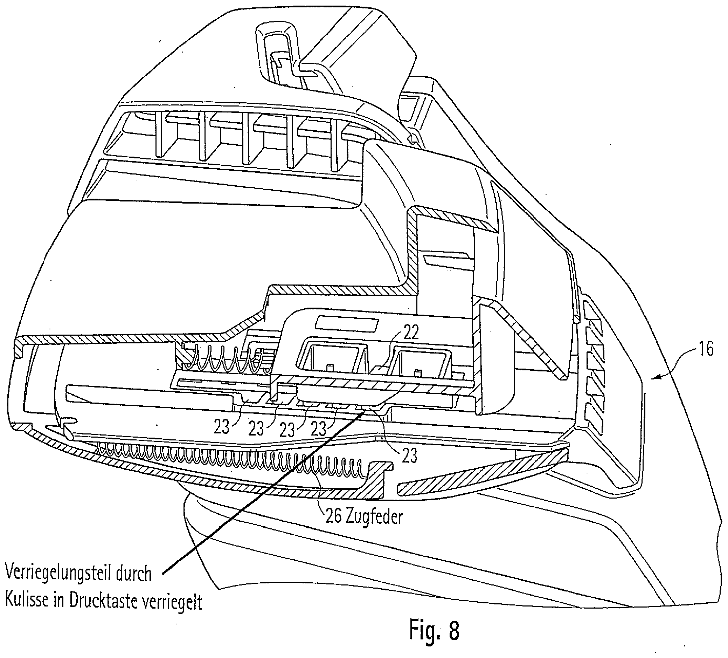

Das Fangelement 16 soll bei der dargestellten Ausführungsform stufenweise verstellbar sein, wobei die Fixierung der Relativstellung des Fangelements 16 gegenüber Sitzteil und Rückenlehne vorzugsweise durch Formschluß erfolgt, und zwar durch einen zwischen Anschlußteil 19 und Fangelement 16 angeordneten Rastmechanismus. Bei einer bevorzugten Ausführungsform umfaßt dieser Rastmechanismus wenigstens zwei, insbesondere aber vier bis acht, vorzugsweise wenigstens fünf Rastpositionen. Dementsprechend umfaßt jedes Anschlußteil 19 ein Rastelement, insbesondere riegelartiges Rastelement 22 (siehe Figuren 7 und 8), welches unter elastischer Vorspannung, d.h. unter Vorspannung einer z.B. Druckfeder in wenigstens zwei, hier fünf am Fangelement 16 in Verstellrichtung desselben voneinander beabstandete Rastausnehmungen 23 einrastbar ist.

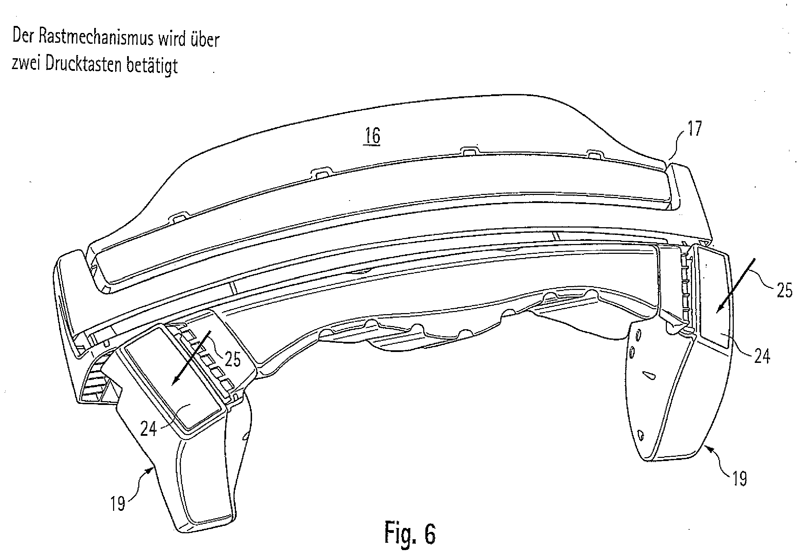

Die jedem Anschlußteil 19 zugeordneten Rastelemente 22 sind mit einer von außen her zugänglichen Drucktaste 24 (siehe Fig. 6) wirkverbunden, durch deren Betätigung in Richtung der Pfeile 25 in Fig. 6 die Rastelemente 22 entgegen deren elastischer Vorspannung in Außerrast- bzw. Fangelement-Freigabestellung bringbar sind, so wie dies in Fig. 7 schematisch dargestellt ist. Dort ist das riegelartige Rastelement 22 außer Eingriff mit einer zugeordneten Rastausnehmung 23 gebracht.

In Fig. 8 befindet sich das riegelartige Rastelement 22 dagegen in Raststellung, d.h. innerhalb einer der fünf Rastausnehmungen 23.

Die Wirkverbindung zwischen Drucktaste 24 und Rastriegel 22 erfolgt in an sich bekannter Weise, vorzugsweise durch eine Kulissensteuerung.

Des weiteren sei erwähnt, daß das Fangelement 16 entgegen der Wirkung eines elastischen Elements, insbesondere einer Zugfeder 26 aus der der Rückenlehne 13 und Sitzfläche 12 nächstgelegenen Stellung in eine davon entferntere Stellung verstellbar bzw. verschiebbar ist. Die erwähnte Zugfeder 26 ist in den Figuren 7 und 8 dargestellt. Dies bedeutet, daß bei Betätigung der Drucktasten 24 und Entriegelung der Rastelemente 22, 23 das Fangelement 16 durch die Zugfeder(n) 26 mehr oder weniger selbsttätig zurückbewegt wird in eine Position entsprechend Fig. 2.

Durch die erwähnten Rastpositionen wird eine feste Verbindung des Fangelements relativ zum Sitz in jeder Rastposition gewährleistet.

Das Sitzteil samt Armlehnen 15 ist ein einheitliches Bauteil aus Kunststoff, welches mit geeignetem Polster überzogen ist. Die Rückenlehne ist in an sich bekannter Weise an das Sitzteil angelenkt oder angeformt.

### Bezugszeichen:

- 10: Kindersitz
- 11: Sitzteil
- 12: Sitzfläche
- 13: Rückenlehne
- 14: Kopfstütze
- 15: Armlehne
- 16: Fangelement
- 17: Öffnung zur Aufnahme von Sicherheitsgurt-Abschnitten
- 18: Doppelpfeil
- 19: Anschlußteil
- 20, 20': Brustauflagebereich
- 21, 21': Beinkontaktbereich
- 22: Rastelement (Rastriegel)
- 23: Rastausnehmung
- 24: Drucktaste
- 25: Pfeil
- 26: Zugfeder

## Patentansprüche

1. Sicherheitsvorrichtung für einen Kindersitz (10) in einem Fahrzeug, mit Sitzfläche (12), und Rückenlehne (13), welche zumindest ein Fangelement und zwei Anschlussteile (19) umfasst, wobei das Fangelement sich etwa quer oberhalb der Oberschenkel eines in dem Kindersitz sitzenden Kindes erstreckend in Richtung etwa parallel zur Sitzfläche verstellbar gelagert ist,
**dadurch gekennzeichnet, dass**
die Verstelleinrichtung (18) des Fangelements (16) sich relativ zur Sitzfläche (12) in einem von hinten nach vorne ansteigenden Winkel (α) > 0, insbesondere in einem Winkel (α) von etwa 5° bis 20°, erstreckt,
wobei das Fangelement (16) stufenlos, oder alternativ stufenweise verstellbar ist,
wobei die Relativstellung des Fangelements (16) kraft und/oder formschlüssig fixierbar ist,
wobei das Fangelement (16) am Kindersitz (10) an mit Armlehnen (15) verbundenen Anschlussteilen (19) in wenigstens zwei unterschiedlichen Positionen relativ zur Sitzfläche (12) und Rückenlehne (13) verrastbar ist.

2. Sicherheitsvorrichtung nach Anspruch 1,
**dadurch gekennzeichnet, dass**
die Anschlussteile (19) in Form von Anschlusswangen ausgebildet sind.

3. Sicherheitsvorrichtung nach Anspruch 1 oder 2,
**dadurch gekennzeichnet, dass**
die Längsführung des Fangelements (16) vier bis acht, insbesondere fünf Rastpositionen umfasst.

4. Sicherheitsvorrichtung nach einem der Ansprüche 1 bis 3,
**dadurch gekennzeichnet, dass**
jedes Anschlussteil (19) ein Rastelement (22) umfasst, welches unter elastischer Vorspannung in wenigstens zwei am Fangelement (16) in Verstellrichtung desselben voneinander beabstandete Rastausnehmungen (23) einrastbar ist.

5. Sicherheitsvorrichtung nach Anspruch 4,
**dadurch gekennzeichnet, dass**
jedes Rastelement (22) mit einer von außen her zugänglichen Drucktaste (24) oder dergleichen Betätigungselement wirkverbunden ist, durch deren bzw. dessen Betätigung (Pfeil 25) das Rastelement (22) entgegen dessen elastischer Vorspannung in Außerrast- bzw. Fangelement-Freigabestellung bringbar ist.

6. Sicherheitsvorrichtung nach einem der Ansprüche 1 bis 5,
**dadurch gekennzeichnet, dass**
das Fangelement (16) entgegen der Wirkung eines elastischen Elements, insbesondere einer Feder (26) aus der der Rückenlehne (13) und Sitzfläche (12) nächstgelegenen Stellung in eine davon entferntere Stellung verstell- bzw. verschiebbar ist.

7. Sicherheitsvorrichtung nach einem der Ansprüche 1 bis 6,
**dadurch gekennzeichnet, dass**
das Fangelement (16) ein der Brust und ggf. auch den Oberschenkeln eines Kindes zugewandten Polster umfasst, welches einen Brustauflagebereich (20, 20') und Beinkontaktbereich (21, 21') definiert.

8. Sicherheitsvorrichtung, insbesondere nach einem der Ansprüche 1 bis 7,
**dadurch gekennzeichnet, dass**
das Fangelement (16) unter Einwirkung von Aufprallkräften plastisch deformierbare Elemente umfasst, insbesondere im Brustauflagebereich und/oder im Bereich des Anschlusses am Kindersitz, insbesondere an den beiden Armlehnen (15) desselben.

9. Sicherheitsvorrichtung nach einem der Ansprüche 1 bis 8,
**dadurch gekennzeichnet, dass**
das Fangelement (16) an der der Rückenlehne (13) abgewandten Seite eine Öffnung (17) zur Aufnahme von Abschnitten, insbesondere eines Horizontal- und Diagonalabschnittes, eines einem Kraftfahrzeug zugeordneten Sicherheitsgurtes, insbesondere Dreipunkt-Sicherheitsgurtes aufweist.

10. Sicherheitsvorrichtung nach einem der Ansprüche 1 bis 9,
**dadurch gekennzeichnet, dass**
das Fangelement (16) einen Hohlkörper mit etwa U-förmigem Querschnitt umfasst, der in montierter Stellung in Richtung nach vorne hin offen ist und eine schlitzartige Gurtaufnahme definiert.

## Claims

1. A safety device for a child seat (10) in a vehicle, having a seating surface (12) and backrest (13), which comprises at least one catch element and two connecting parts (19), the catch element being mounted in an adjustable manner approximately diagonally above the thigh of a child sitting in the child seat, extending in the direction approximately parallel to the seating surface,
**characterized in that**
the adjustment device (18) of the catch element (16) extends at an angle (α) > 0, rising from the rear forwards, particularly at an angle (α) of approximately 5° to 20° relatively to the seat surface (12),
wherein the catch element (16) is adjustable in an infinitely variable or alternatively step-by-step manner,
wherein the relative position of the catch element (16) can be fixed in a non-positive and/or positive manner,
wherein the catch element (16) can be locked on the child seat (10) in at least two different positions relatively to the seating surface (12) and backrest (13) on connecting parts (19) connected to armrests (15).

2. The safety device according to claim 1, **characterized in that**
the connecting parts (19) are constructed in the form of connecting flanks.

3. The safety device according to claim 1 or 2, **characterized in that**
the longitudinal guide of the catch element (16) comprises four to eight, and in particular five locking positions.

4. The safety device according to one of claims 1 to 3, **characterized in that**
each connecting part (19) comprises a locking element (22), which can latch under elastic prestress into at least two latching recesses (23) spaced apart from one another on the catch element (16) in the adjustment direction of the same.

5. The safety device according to claim 4, **characterized in that**
each latching element (22) is operatively connected to a pushbutton (24) accessible from the exterior or similar actuating element, by the actuation of which (arrow 25), the latching element (22) can be brought, counter to the elastic prestress thereof, into a non-latched position or catch-element release position.

6. The safety device according to one of claims 1 to 5, **characterized in that**
the catch element (16) can be adjusted or displaced, counter to the action of an elastic element, particularly a spring (26), out of the position nearest to the backrest (13) and seating surface (12), into a position more distant therefrom.

7. The safety device according to one of claims 1 to 6, **characterized in that**
the catch element (16) comprises a cushion facing the chest and, if appropriate, also the thighs of a child, which defines a chest support region (20, 20') and leg contact region (21, 21').

8. The safety device, particularly according to one of claims 1 to 7, **characterized in that**
the catch element (16) comprises elements which are plastically deformable under the action of impact forces, particularly in the chest support region and/or in the region of the connection on the child seat, particularly on the two armrests (15) thereof.

9. The safety device according to one of claims 1 to 8, **characterized in that**
the catch element (16) has an opening (17) on the side facing away from the backrest (13) for accommodating sections, particularly a horizontal and diagonal section, of a safety belt, particularly a three-point safety belt, assigned to a motor vehicle.

10. The safety device according to one of claims 1 to 9, **characterized in that**
the catch element (16) comprises a hollow body with approximately U-shaped cross section, which is open in the forwards direction in the mounted position and defines a slot-like belt mount.

## Revendications

1. Dispositif de sécurité destiné à un siège pour enfant (10) dans un véhicule, pourvu d'une assise (12) et d'un dossier (13), lequel comprend au moins un élément preneur et deux pièces de raccordement (19), l'élément preneur étant logé, en s'étendant approximativement à la transversale au-dessus des cuisses d'un enfant assis dans le siège pour enfant en étant ajustable approximativement à la parallèle de l'assise,
**caractérisé en ce que** le système d'ajustage (18) de l'élément preneur (16) s'étend par rapport à l'assise (12) sous un angle (α) > 0 croissant de l'arrière vers l'avant, notamment sous un angle (α) d'approximativement de 5° à 20°,
l'élément preneur (16) étant ajustable en continu, ou en variante progressivement,
la position relative de l'élément preneur (16) étant susceptible d'être fixée par complémentarité de force et/ou de forme,
l'élément preneur (16) étant enclenchable sur le siège pour enfant (10) sur des pièces de raccordement (19) reliées avec des accoudoirs (15) dans au moins deux positions différentes par rapport à l'assise (12) et au dossier (13).

2. Dispositif de sécurité selon la revendication 1, **caractérisé en ce que**
les pièces de raccordement (19) sont conçues sous la forme de joues de raccordement.

3. Dispositif de sécurité selon la revendication 1 ou 2, **caractérisé en ce que**
le guidage longitudinal de l'élément preneur (16) comprend de quatre à huit, notamment cinq positions d'enclenchement.

4. Dispositif de sécurité selon l'une quelconque des revendications 1 à 3,
**caractérisé en ce que**
chaque pièce de raccordement (19) comprend un élément d'enclenchement (22), lequel sous précontrainte élastique est enclenchable dans au moins deux évidements d'enclenchement (23) écartés l'un de l'autre sur l'élément preneur (16) dans la direction d'ajustage de celui-ci.

5. Dispositif de sécurité selon la revendication 4, **caractérisé en ce que**
chaque élément d'enclenchement (22) est en liaison active avec un bouton-poussoir (24) accessible par l'extérieur ou un élément de manoeuvre similaire, par la manoeuvre duquel (flèche 25) l'élément d'enclenchement (22) est susceptible d'être amené à l'encontre de sa précontrainte élastique dans la position de désenclenchement ou de libération de l'élément preneur.

6. Dispositif de sécurité selon l'une quelconque des revendications 1 à 5,
**caractérisé en ce que**
l'élément preneur (16) est ajustable ou déplaçable à l'encontre de l'action d'un élément élastique, notamment d'un ressort (26) hors de la position la plus proche du dossier (13) et de l'assise (12) dans une position éloignée de celle-ci.

7. Dispositif de sécurité selon l'une quelconque des revendications 1 à 6,
**caractérisé en ce que**
l'élément preneur (16) comprend un rembourrage dirigé vers le torse et le cas échéant, également vers les cuisses d'un enfant, lequel définit une zone d'appui sur le torse (20, 20') et une zone d'appui sur les jambes (21, 21').

8. Dispositif de sécurité, notamment selon l'une quelconque des revendications 1 à 7, **caractérisé en ce que**
l'élément preneur (16) comprend des éléments plastiquement déformables sous l'effet de forces d'impact, notamment dans la zone d'appui sur le torse et/ou dans la zone de raccordement sur le siège pour enfant, notamment sur les deux accoudoirs (15) de celui-ci.

9. Dispositif de sécurité selon l'une quelconque des revendications 1 à 8,
**caractérisé en ce que**
sur le côté opposé au dossier (13), l'élément preneur (16) comporte un orifice (17) destiné à recevoir des parties, notamment une partie horizontale et une partie diagonale d'une ceinture de sécurité affectée à un véhicule automobile, notamment d'une ceinture de sécurité à trois points.

10. Dispositif de sécurité selon l'une quelconque des revendications 1 à 9,
**caractérisé en ce que**
l'élément preneur (16) comprend un corps creux de section transversale approximativement en forme de U, qui en position montée est ouvert dans la direction donnant sur l'avant et définit un logement de ceinture sous forme de fente.
